(19) **Europäisches Patentamt**
**European Patent Office**
**Office européen des brevets**

(11) **EP 2 514 211 B1**

(12) **EUROPÄISCHE PATENTSCHRIFT**

(45) Veröffentlichungstag und Bekanntmachung des Hinweises auf die Patenterteilung:
**26.03.2014 Patentblatt 2014/13**

(21) Anmeldenummer: **10809269.3**

(22) Anmeldetag: **13.12.2010**

(51) Int Cl.:
**G02B 26/10** (2006.01)　　**H04N 9/31** (2006.01)

(86) Internationale Anmeldenummer:
**PCT/EP2010/007684**

(87) Internationale Veröffentlichungsnummer:
**WO 2011/082789 (14.07.2011 Gazette 2011/28)**

(54) **ABLENKEINRICHTUNG FÜR EINE PROJEKTIONSVORRICHTUNG, PROJEKTIONSVORRICHTUNG ZUM PROJIZIEREN EINES BILDES UND VERFAHREN ZUM ANSTEUERN EINER ABLENKEINRICHTUNG FÜR EINE PROJEKTIONSVORRICHTUNG**

DEFLECTION SYSTEM FOR A PROJECTION DEVICE, PROJECTION DEVICE FOR PROJECTING AN IMAGE AND METHOD FOR ACTUATING A DEFLECTION SYSTEM FOR A PROJECTION DEVICE

DISPOSITIF DÉFLECTEUR POUR UN ÉQUIPEMENT DE PROJECTION, ÉQUIPEMENT DE PROJECTION DESTINÉ À PROJETER UNE IMAGE ET PROCÉDÉ DE COMMANDE D'UN DISPOSITIF DÉFLECTEUR POUR UN ÉQUIPEMENT DE PROJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2009　DE 102009058762**

(43) Veröffentlichungstag der Anmeldung:
**24.10.2012 Patentblatt 2012/43**

(73) Patentinhaber: **Fraunhofer-Gesellschaft zur Förderung der angewandten Forschung e.V.
80686 München (DE)**

(72) Erfinder:
• **HOFMANN, Ulrich
25524 Itzehoe (DE)**

• **RATZMANN, Lars
25832 Tönning (DE)**
• **JANES, Joachim
25524 Itzehoe (DE)**
• **WEISS, Manfred
25524 Itzehoe (DE)**
• **MÜHLMANN, Sascha
25524 Itzehoe (DE)**

(74) Vertreter: **Pfenning, Meinig & Partner GbR Patent- und Rechtsanwälte
Joachimstaler Strasse 12
10719 Berlin (DE)**

(56) Entgegenhaltungen:
**WO-A1-2006/063577　　DE-A1-102007 032 801
US-A1- 2006 117 854　　US-A1- 2009 059 179**

EP 2 514 211 B1

**Beschreibung**

Die Erfindung betrifft eine Ablenkeinrichtung für eine Projektionsvorrichtung, eine Projektionsvorrichtung zum Projizieren eines Bildes auf ein Bildfeld und ein Verfahren zum Ansteuern einer Ablenkeinrichtung.

Im Stand der Technik sind so genannte Lissajous-Projektoren bekannt, bei denen Spiegel verwendet werden, welche in zwei Achsen resonant oder nahezu resonant und damit sinusförmig schwingen. Prinzipbedingt sind diese auch als Resonanzscanner bezeichneten Spiegel in der Lage, sehr viel größere Amplituden zu erzielen, als nicht resonant betriebene Scanner. Größere Amplituden sind auf eine scannende Laserprojektion bezogen, gleichbedeutend mit einer höheren optischen Auflösung. Aus diesem Grund ist die Lissajous-Projektion für kompakte Laserprojektoren von großem Interesse, auch wenn sie eine inhomogene Ausleuchtung in beiden Achsen aufweist.

Aus der EP 1 419 411 B1 ist eine Projektionsvorrichtung bekannt, bei der sich die beiden Scan- oder Ansteuerfrequenzen der zwei Ablenk- oder Scan-Achsen um weniger als eine Größenordnung unterscheiden, also f1/f2<10. Das dazu verwendete Ablenk- bzw. Scansystem umfasst dabei Mittel, um die Scanfrequenzen in jeder Achse auf die Frequenzen f1 bzw. f2 zu fixieren. Damit ist gewährleistet, dass sich eine geschlossene, ortsfeste Lissajous-Figur ergibt, welche sich periodisch wiederholt. Ferner gilt für die Lissajous-Wiederholfrequenz fr=f1/n=f$_2$/m, wobei n und m ganze Zahlen sind. Dieser bekannte Stand der Technik schlägt feste Frequenzen zur Realisierung der Bildprojektion vor. Es müssen somit geeignete Mittel zur Frequenz-Stabilisierung vorgesehen werden, damit ein festes rationalzahliges Frequenzverhältnis f1:f2=n:m dauerhaft besteht.

Auch die DE 10 2008 008 565 offenbart ein Lissajous-Projektions-Verfahren mit zwei festgehaltenen Frequenzen, deren größter gemeinsamer Teiler die Wiederholrate der Lissajous-Figur bildet.

Die Patentschrift US 7 580 007 B2 schlägt ebenfalls ein Lissajous-Projektionsverfahren mit festen Frequenzen f1 und f2 vor, in der sich die Lissajous-Trajektorie nach einer ganzzahligen Anzahl an Horizontalschwingungen wiederholt.

WO 2006/063577 A1 beschreibt ein weiteres Lissajous-Projektionsverfahren mit einer Ablenkeinheit hoher Güte und DE 10 2007 032801 A1 ein Projektionsverfahren, welches die Resonanzfrequenz der Ablenkeinheit durch eine zweite Strahlungsquelle anpasst.

Bei den beschriebenen Lissajous-Projektionsverfahren bzw. Projektionsvorrichtungen, die darauf basieren, dass die beiden Scan-Frequenzen f1 und f2 der in Resonanz oder nahe der Resonanz betriebenen Achsen der Ablenkeinheit bzw. des MEMS-Scanners zeitlich konstant sind, tritt das Problem auf, dass die Schwingungs-Amplitude zeitlich auch dann konstant gehalten werden muss, wenn sich die Resonanzfrequenz des oder der resonanten mechanischen Schwingungssysteme, auch mechanische Oszillatoren genannt, sich durch äußere Einflüsse, wie etwa plötzliche Temperaturänderung, z.B. durch veränderte Laserleistung hervorgerufen, ändert. Damit die mit der Änderung der Resonanzfrequenz einhergehende Amplituden-Änderung gering bleibt, ist eine breite Resonanzkurve, gleichbedeutend mit einem niedrigen Gütefaktor, Voraussetzung.

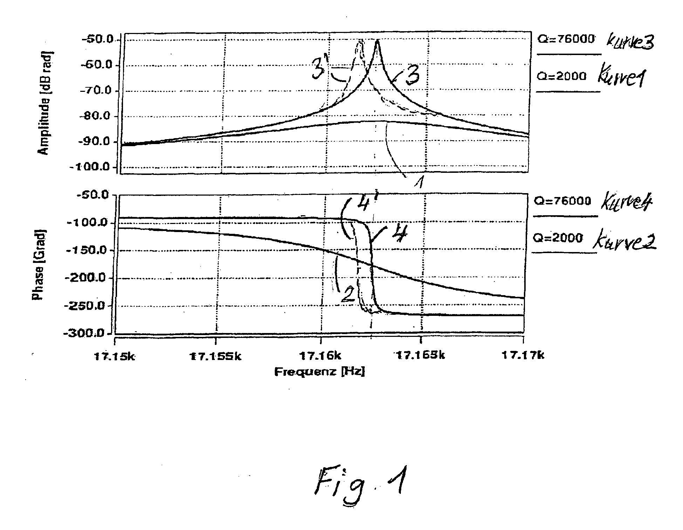

In Fig. 1 ist ein Amplituden- und ein Phasengang über die Frequenz dargestellt, wobei mit 1 ein gedämpfter Resonanz-Scanner bzw. eine gedämpfte Ablenkeinheit niedriger Güte mit einem Gütefaktor von Q=2.000 und mit 2 die entsprechende Phase dargestellt ist. Dabei ist der Gütefaktor Q definiert als das Verhältnis von Resonanzfrequenz zur Bandbreite und die Bandbreite ist definiert als die Breite des Resonanzpeaks, an der Stelle, an der die Dämpfung 3,01 dB erreicht. Die im Stand der Technik beschriebenen Projektionsvorrichtungen werden nur in Verbindung mit solchen stark gedämpften Ablenkeinheiten verwendet, bei denen die Resonanzkurve so flach ist, dass bei Änderung der Resonanzfrequenz, beispielsweise durch Temperaturänderungen oder dergleichen nur eine sehr geringe Amplitudenänderung und Phasenänderung auftritt, die unter Umständen durch Erhöhung der Antriebsenergie schnell genug ausgeglichen werden kann. Dies bedeutet, dass die bekannten Ablenkeinheiten, die einen niedrigen Gütefaktor aufweisen, eine gute Amplituden-Stabilität, eine gute Phasen-Stabilität und auch eine breite Frequenz-Durchstimmbarkeit haben. Allerdings haben diese bekannten Ablenkeinheiten auch ganz entscheidende Nachteile. Die hohe Dämpfung erfordert grundsätzlich einen wesentlich höheren Energieverbrauch, was insbesondere für den mobilen Einsatz, wie beispielsweise im Mobiltelefon nachteilig ist. Weiterhin sind mit den üblichen, in der Mikrotechnik zur Verfügung stehenden Kräften die erzielbaren Amplituden begrenzt.

Für die Projektion sehr hoch aufgelöster Bilder, wie beispielsweise bei einer HDTV-Auflösung werden nicht nur extrem schnelle Ablenkeinheiten oder Resonatoren mit Ablenkfrequenzen >32 kHz benötigt, sondern auch sehr große optische Ablenkwinkel. Als Größe wird das so genannte Theta-D-Produkt angegeben, das definiert ist aus dem Produkt des Durchmessers D des Ablenkelements, z.B. einer Spiegelplatte, und einseitiger mechanischer Scan- oder Auslenkamplitude Theta bzw. mechanischer Halbwinkel. Für eine HDTV-Auflösung muss das erforderliche Theta-D-Produkt größer als 24 Grad * mm sein, z.B. bei D = 1,5 mm und Theta >16 Grad, wobei dies einem optischen Gesamtscan- oder Ablenkwinkel von >64 Grad entspricht. Diese Vorgaben sind mit den im Stand der Technik bekannten stark gedämpften MEMS-Ablenkeinheiten bislang nicht erzielbar.

Der Erfindung liegt die Aufgabe zugrunde, eine Ablenkeinrichtung zu schaffen, die eine hohe Scan- bzw. Ablenkfrequenz ermöglicht und gleichfalls ein hohes Theta-D-Produkt zur Verfügung stellt.

Diese Aufgabe wird, allerdings nur teilweise (wird im Folgenden erläutert), von einer Ablenkeinrichtung gelöst, die eine hochgütige Ablenkeinheit aufweist.

In der Fig. 1 ist gleichfalls der Amplitudengang eines wenig bedämpften Scanners bzw. einer wenig bedämpften Ablenkeinheit und der zugehörige Phasengang 4 dargestellt, wobei zu erkennen ist, dass die Amplitudenkennlinie 3 eine starke Resonanzerhöhung aufweist und die Phasenkennlinie 4 einen starken Abfall, d.h. eine große Steigung aufweist. Eine Ablenkeinheit, die diesen Kurven 3 und 4 zugrunde liegt, weist einen Gütefaktor Q=76.000 auf. Wie aus diesen Kurven erkennbar ist, ändert eine solche Ablenkeinheit bei festgehaltener Ansteuerfrequenz bzw. Schwingungsfrequenz schon bei kleinen Resonanzfrequenz-Verschiebungen in ganz erheblicher Weise seine Amplitude, die mit den zur Verfügung stehenden Antriebsenergieen nicht auszugleichen sind, d.h. dass z.B. kleinste Temperaturveränderungen genügen, um die Ablenkeinheit aus der Resonanz zu bringen. Dabei würde das Antriebssignal mit der festen Antriebsfrequenz nicht mehr beschleunigend, sondern bereits stark abbremsend wirken. Daher können die Lissajous-Projektionsverfahren bzw. -vorrichtungen nach dem Stand der Technik mit festgehaltenen Frequenzen nicht in Verbindung mit sehr hochgütigen Resonatoren bzw. Ablenkeinheiten verwendet werden, da sie keine zeitlich stabilen Bildgrößen bzw. keinen stabilen Betrieb erlauben.

Im Folgenden werden einige Zahlenbeispiele für die Kurven gemäß Fig. 1 gegeben, wobei es sich bei der Ablenkeinheit mit den Kurven 3 und 4 um einen auf der Wafer-Ebene vakuum-gekapselten zweiachsigen kardanisch aufgehängten Mikrospiegel-Scanner mit zueinander orthogonalen Achsen handelt, der einen Gütefaktor von Q = 76.000 hat. Der im Vergleich stark gedämpfte niedriggütige Mikrospiegel-Scanner mit den Kurven 1 und 2 und dem Gütefaktor Q = 2.000 wird bei Atmosphärendruck betrieben, hat aber im Wesentlichen die gleichen Abmessungen wie der hochgütige Spiegel. Der stark gedämpfte Scanner mit Q = 2.000 verändert seine Schwingungs-Phasenlage im Vergleich zum Ansteuersignal um rund 13 Grad bei einer von außen erzeugten Frequenzverschiebung von ±0,5 Hz. Ein entsprechender Spiegel liefert bei Unterdruck-Betrieb und einem Gütefaktor von Q = 76.000 eine Phasenverschiebung von 154 Grad, wenn von außen eine Frequenzverschiebung von ebenfalls ±0,5 Hz induziert wird. Auf die Amplitude bezogen erzeugt eine solche von außen induzierte Frequenzverschiebung im gering gedämpften Fall eine Amplituden-Verringerung um 14 dB, wohingegen im gedämpften Fall eine Amplitudenänderung um nur 0,06 dB auftritt. Innerhalb des im Automobil-Sektor vorgegebenen Temperatur-Bereichs von -40°C bis +85°C, für den die Funktionstüchtigkeit eines Bauelements nachgewiesen werden muss, können abhängig vom Spiegeldesign und der Resonanzfrequenz sehr leicht Frequenzverschiebungen um einige Hertz induziert werden, was zu noch viel größeren Phasen- und Amplitudenschwankungen führen würde.

Unter Berücksichtigung der oben genannten Ausführungen liegt somit der Erfindung zusätzlich die Aufgabe zugrunde, eine Ablenkeinrichtung für eine Projektionsvorrichtung zum Projizieren von Lissajous-Figuren auf ein Beobachtungsfeld zu schaffen, die eine geringe Dämpfung aufweist und die für einen großen Temperaturbereich im Resonanzbetrieb der Ablenkeinheit verwendet werden kann, wobei der Energieverbrauch geringer ist als bei Ablenkreinrichtungen im Stand der Technik. Weiterhin liegt der Erfindung die Aufgabe zugrunde, ein Verfahren zum Ansteuern einer Ablenkeinrichtung für eine Projektionsvorrichtung zum Projizieren von Lissajous-Figuren zu schaffen, die einen Betrieb der Ablenkeinheit in Resonanz gestattet, auch wenn die Resonanzfrequenz der Ablenkeinheit sich durch äußeren Einfluss ändert.

Diese Aufgabe wird durch eine Ablenkeinrichtung gelöst, die einen Gütefaktor von größer als 3.000 aufweist und deren Ansteuervorrichtung einen Regelkreis aufweist, der ausgebildet ist, abhängig von der gemessenen Phasenlage der Schwingungen der Ablenkeinheit die erste und/oder die zweite Ansteuerfrequenz der Ansteuersignale so zu regeln, dass der steile Phasenabfall und/oder die maximale Amplitude der Schwingungen der Ablenkeinheit in deren Resonanzbereich gehalten werden, d.h. Phase und/oder Amplitude werden im Wesentlichen konstant gehalten.

In entsprechender Weise wird bei dem Verfahren zum Ansteuern einer Ablenkreinrichtung diese so gewählt, dass sie einen Gütefaktor >3.000 aufweist und dass die Phasenlage der Schwingungen der Ablenkeinheit um mindestens eine Ablenkachse gemessen wird und die erste und/oder zweite Ansteuerfrequenz abhängig von der gemessenen Phasenlage so geregelt wird, dass die Phasenlage und die maximale Amplitude der Schwingungen der Ablenkeinheit im Resonanzbereich gehalten werden.

Durch Messen der Phasenlage und Regeln der Phase bzw. der Ansteuerfrequenzen derart, dass eine gleich bleibende Amplitude im Resonanzbereich gewährleistet wird, können hochgütige Scanner verwendet werden, die einen großen Gesamtablenkwinkel aufweisen. Die Antriebs- bzw. Ansteuerfrequenzen und damit zugleich die Resonator-Schwingungsfrequenzen stellen die notwendigen Freiheiten dar, um die Phasen und die Amplituden vorzugsweise beider Ablenkachsen auch bei sich ändernden Einsatz- oder Umgebungsbedingungen konstant zu halten und damit die Ablenkeinheit stabil in Resonanz oder nahe der Resonanz zu betreiben.

Daraus resultiert zugleich, dass die erzielte Lissajous-Trajektorie sich nicht periodisch wiederholt, d.h. es wird eine Projektion mit nicht ortsfester Lissajous-Trajektorie verwendet, bei der die Ansteuerfrequenzen bzw. Resonanzfrequenzen nicht fest sind und daher auch nicht in einem ganzzahligen Verhältnis zueinander stehen müssen. Die Ansteuerfrequenzen sind entsprechend der Regeleinrichtung zur Phasen- und Amplitudenstabilisierung veränderbar.

Durch die in den Unteransprüchen angegebenen Merkmale sind vorteilhafte Weiterbildungen und Verbesserungen möglich.

Die Vorgaben für den zulässigen Änderungsbereich der Amplitude sind von den Eigenschaften des Ablenkelements und von der Auflösung des Beobachtungsfeldes bestimmt. Beispielsweise ist der Änderungsbereich als Kehrwert der Minimalauflösung in einer Achse vorgegeben. Bei einer Definition unter Verwendung von Pixeln sollte sich die Amplitude vorzugsweise um weniger als eine "Pixelbreite" ändern. Beispielsweise sollte sich die Amplitude des Ablenkelements im Falle einer Minimalauflösung von 480 x 640 Pixeln um weniger als 1/480 (0,00283) und 1/640 (0,00146) ändern. Vorzugsweise sollte die Amplitude sich um weniger als 1% ändern, noch bevorzugter um weniger als 0,5%, noch besser um weniger als 0,3% ändern.

In einem besonders bevorzugten Ausführungsbeispiel ist dem Phasenregelkreis ein Liniendichte-Regelkreis nachgeschaltet, der abhängig von einer maßgeblich durch die Ansteuerfrequenzen vorgegebenen und gegebenenfalls errechenbaren momentanen Liniendichte der Lissajous-Trajektorie die Resonanzfrequenz einer oder beider Antriebsachsen so beeinflusst, dass die Liniendichte einen vorgebbaren Toleranzbereich nicht verlässt. Für die Bestimmung der momentanen Liniendichte ist auch die Ansteuerphase, d.h. der Startpunkt oder Beginn der Oszillation zu berücksichtigen. Dabei ist der üblicherweise elektrostatisch angetriebene Mikrospiegel bzw. die Ablenkeinheit hinsichtlich der Resonanzfrequenz auf verschiedene Weise gezielt beeinflussbar, nämlich durch gezielte TemperaturÄnderung, durch gezielte Erhöhung oder Erniedrigung der Antriebsspannung der Ablenkachsen und/oder durch aktive Veränderung der Federsteifigkeit. Die Temperaturbeeinflussung kann unter anderem durch IR-Laserbestrahlung vorgenommen werden, wie weiter unten beschrieben wird. eine Erhöhung der Antriebsspannung der Ablenkachsen führt zu einer Erniedrigung der Resonanzfrequenz, da sich die erhöhten Antriebskräfte wie eine Aufweichung der Federaufhängung auswirken. Die Erhöhung oder Erniedrigung der Antriebsspannungen kann durch zusätzlich zu den Antriebpotentialen aufgebrachte Überlagerung einer Gleichspannung vorgenommen werden, wobei die Stärke der Resonanzfrequenzverschiebung durch die Höhe der Amplitude des Gleichspannungssockels beeinflusst werden kann.

Die gezielte Veränderung der Federsteifigkeit kann mit zusätzlichen Aktuatoren erlangt werden, die direkt an der Feder, z.B. Torsionsfeder ansetzen und diese entweder lateral stauchen oder dehnen.

Da gegebenenfalls mit der Liniendichteregelung gleichzeitig auch die Amplitude der Schwingung etwas verändern kann, kann neben dem Phasenregelkreis auch noch ein Amplitudenregelkreis vorgesehen werden. Dabei hat der Phasenregelkreis die höchste Priorität und ist permanent schnell reagierend, während der Liniendichteregelkreis und gegebenenfalls der Amplitudenregelkreis nachgeordnet sind und langsamer reagieren.

Der Liniendichte-Regelkreis kann unter Heranziehung verschiedener Informationen seine Regelung bzw. Steuerung durchführen. Beispielsweise kann eine Liste mit diskret abgespeicherten ungünstigen Wiederholrate, d.h. Ansteuerfrequenzverhältnissen (f1/p, f2/q) gespeichert sein. Allerdings ist eine solche Liste nicht in allen Fällen praktikabel, da sie gegebenenfalls umfangreich sein kann und da erst ein ungünstiger Ansteuerfall zugelassen werden müsste, bevor er identifiziert werden kann. Daher ist es beispielsweise in einer anderen Möglichkeit sinnvoll, den Abstand zwischen momentaner Wiederholrate der Lissajous-Figuren und nächst benachbarter ungünstiger Wiederholrate zu verfolgen und eine entsprechende Gegenregelung vorzunehmen bevor der ungünstige Fall eintritt. Ein PID-Regler kann dabei das Abstandsmaß überwachen.

Vorzuziehen ist, dass die Ablenkeinheit einen Gütefaktor >20.000, vorzugsweise >100.000 aufweist. Durch die Verwendung solcher hochgütiger Resonator-Ablenkeinheiten können die erforderlichen großen optischen Scanwinkel von größer als 60 Grad, beispielsweise mit elektrostatischen Ablenkelementen auch bei niedrigen Antriebsspannungen zwischen 5 und 90 Volt erzielt werden.

Besonders vorteilhaft ist, dass die Ablenkeinheit vakuumgekapselt ist, vorzugsweise auf Waferebene. Durch diese Maßnahme, d.h. durch den Betrieb bei reduziertem Umgebungsdruck (p < 1 mbar) wird die Dämpfung der Schwingungen der Ablenkeinheit verringert. Dabei kann der Gütefaktor fertigungstechnisch gezielt beeinflusst werden durch eine gezielte Verschlechterung des Vakuums mittels eines Gas-Rückfüll-Prozesses. Das heißt: Zunächst wird ein Minimaldruck dadurch realisier, dass ein in der Spiegel-Kavität eingeschlossener Getter (z.B. Titan) aufgeheizt wird und Gasmoleküle chemisch verbindet. Ist das Vakuum zu gut (der Druck zu niedrig, bzw, der Gütefaktor unerwünscht hoch), dann kann beim nächsten Wafer bereits vor dem endgültigen Verkapseln und Aufheizen eine Inertgas-Befüllung durchgeführt werden. Diese Gasmoleküle können chemisch nicht durch den Getter gebunden werden und tragen daher weiterhin zur Dämpfung und damit zur Gütefaktor-Reduktion bei. Eine gezielte Vakuum-Verbesserung bzw. Gütefaktor-Erhöhung kann nur durch Verwendung eines Getters mit einer höheren Getter-Kapazität (besseres Getter-Material und größere Getter-Oberfläche) erzielt werden.

Vorzugsweise weist die Ansteuervorrichtung eine Messvorrichtung zur kapazitiven, optischen, piezoresistiven oder piezoelektrischen Messung der Phasenlage auf. Die Phasenlage wird dabei aus der Amplitudeninformation der sinusförmigen Schwingungen des Ablenkelements ermittelt, wobei vorzugsweise der Nulldurchgang der Schwingung herangezogen wird.

In einem bevorzugten Ausführungsbeispiel ist eine Strahlungsquelle zur Temperaturstabilisierung vorgesehen, wobei die Ansteuervorrichtung ausgebildet ist, die Strahlungsquelle zum Bestrahlen der Ablenkeinheit einzuschalten, wenn die zur Regelung der Phasenlage und der Amplitude auftretende Änderung der ersten und/ oder zweiten Ansteuerfrequenz größer ist als ein vorgegebener Wert. Damit können Temperaturänderungen kompensiert werden.

Vorteilhaft ist, dass der Liniendichte-Regelkreis mindestens eine auf die Ablenkeinheit gerichtete Strahlungsquelle, vorzugsweise eine IR Laserdiode zur Temperaturbeeinflussung umfasst, und die Ansteuervorrichtung bzw. dieser Regelkreis ausgebildet ist, den von der Strahlungsquelle hervorgerufenen Leistungseintrag, abhängig von vorgegebenen, die Dichte der Lissajous-Figuren bestimmenden Verhältnissen der Ansteuerfrequenzen, die durch die Phasenregelung veränderbar sind, zu regeln. Dabei können die die Verhältnisse bestimmenden Frequenzverschiebungen vorgegebenen und gespeicherten Leistungseinträgen zugeordnet sein, vorzugsweise in Form einer Kurve oder einer Tabelle oder eines einprogrammierten funktionalen Zusammenhanges bzw. einer mathematischen Funktion, die im einfachsten Falle nur die Ansteuerfrequenzen f1 und f2 gegebenenfalls aber auch eine Reihe von Parametern auswertet, z.B. f = fIR-Laserleistung (f1, f2, momentane Projektions-Laserleistung, momentane IR-Laserleistung, MEMS-Temperatur, ...). Die Regelung kann auch mittels eines PID-Reglers vorgenommen werden. Ohne die Option des Trimmens der Frequenzverhältnisse, d.h. der Temperaturbehandlung müsste eine Fülle von Spiegel-Chips aussortiert werden, weil diese ungünstige Resonanzfrequenzen besitzen und Lissajous-Trajektorien mit stets nur geringer Liniendichte liefern.

Ziel der Temperaturbehandlung ist, sicher zu stellen, dass parallel zur Amplitudenstabilität, welche durch die Phasenregelung gewährleistet ist, gleichzeitig auch die Liniendichte der Lissajous-Trajektorie bezogen auf den Zeitraum eines Teilbildes (typisch 1/60 Sekunde) optimal ist. Mit anderen Worten: Die Phasenregelung hält den Spiegel in Resonanz und stabilisiert die Amplitude. Doch diese Regelung kann dazu führen, dass ungünstige Liniendichten eingestellt werden. Ohne die zusätzliche Beeinflussung durch den Liniendichte-Regelkreis z.B. durch die ThermoRegulation gibt es sonst keine Möglichkeit, die Liniendichte zu verändern.

Die Temperaturbeeinflussung in Bezug auf die Ablenkeinheit durch Bestrahlen der Ablenkeinheit muss nicht dauerhaft im Einsatz sein, sondern ergänzt die ständig vorhandene Phasenregelung, d.h. die Phasenregelung muss immer aktiv sein, während die Temperatur-Beeinflussung nicht immer aktiv sein muss. Die Temperatur-Beeinflussung könnte daher den Charakter einer gezielten Störung besitzen. Sie kann aber auch wie eine dauerhafte Regelung ausgelegt werden. Das hängt von der Situation ab. Vorhersagbare Schwankungen der Resonanzfrequenz, die beispielsweise durch den wechselnden Bildinhalt bedingt sind, können permanent durch Infrarot-Laser-Beschuß kompensiert werden, z.B. mittels einer Look-up-Table. Schon beim Beschreiben bzw.

Auslesen des Bildspeichers kann der zu erwartende Energie-Eintrag in den Spiegel vorausberechnet werden und in entsprechender Weise per IR-Quelle kompensierend gegen gesteuert werden. Die Gegensteuer-Informationen können einer Look-up Table entnommen werden. Überlagerte Ereignisse, wie Schock oder Vibrationen oder von extern induzierten unvorhersagbare Temperatur-Änderungen müssen durch zusätzliche Thermoregulation abhängig vom Weglaufen der Ansteuerfrequenzen (und damit der Liniendichte) kompensiert werden. Es muss also erst eine Störung auftreten, damit vom Regelkreis gegen geregelt werden kann, anders als bei der vorhersagbaren Beeinflussung durch den Bildinhalt.

In einem bevorzugten Ausführungsbeispiel weist die Ablenkeinheit mindestens einen Mikrospiegel auf, wobei der die Auslenkung des Spiegels angebende optische Gesamtscanwinkel >30 Grad, vorzugsweise >40 Grad und noch bevorzugter >60 Grad ist. Dabei kann der Mikrospiegel ein zweiachsiger, kardanisch an Torsionsfedern aufgehängter Mikrospiegel sein, es können aber auch hintereinander angeordnete einachsige Spiegel verwendet werden. Üblicherweise wird der in der Ablenkvorrichtung verwendete Spiegel um zwei zueinander orthogonal angeordnete Achsen schwingen. Es können aber auch von 90 Grad abweichende Winkel zwischen den Scan- oder Ablenkachsen eingeschlossen werden. Auch ist das erfindungsgemäße Verfahren bzw. die erfindungsgemäße Ablenkeinrichtung nicht notwendigerweise auf zwei Achsen beschränkt. So kann auch ein Scanner mit beispielsweise drei oder mehr Torsions- und/oder Biegefederaufhängungen verwendet werden, um eine komplexe, dicht gepackte Lissajous-Trajektorie zu realisieren. Die erfindungsgemäßen Ausführungen sind auch nicht auf eine spezifische Bauweise des MEMS-Scanners beschränkt, z.B. auf eine kardanische Aufhängung des Spiegels oder auf eine spezielle Antriebsart, wie die mit Elektrodenkämmen. Voraussetzung ist stets, dass die vorgesehene Projektionsfläche in ausreichender Geschwindigkeit und Dichte durch den Projektionsstrahl abgetastet wird. Dieses könnte auch durch einen MEMS-Aktuator, der die Strahlablenkung nicht durch Reflexion an einem Spiegel, sondern durch ein brechendes oder beugendes Element erzielt, erreicht werden.

Vorzugsweise wird die erfindungsgemäße Ablenkeinrichtung für eine Projektionsvorrichtung zum Projizieren eines Bildes auf ein Bildfeld verwendet, die Anwendungsbandbreite ist jedoch nicht auf eine solche Projektionsvorrichtung beschränkt, sondern beinhaltet auch scannende, sensorische Bilddetektionsaufgaben, wie in der Endoskopie oder in der scannenden Mikroskopie. Bei der Projektionsvorrichtung zum Projizieren eines Bildes auf ein Bildfeld ist neben der Ablenkeinrichtung zusätzlich eine Modulationseinheit zum Modulieren der Intensität des Lichtstrahls abhängig von dem zu projizierenden Bild und dem Ort des Lichtstrahls auf dem Bildfeld vorgesehen. In einem bevorzugten Ausführungsbeispiel umfasst die Strahlungsquelle zur Erzeugung des abzulenkenden Lichtstrahls mehrfarbig abstrahlende Laserdioden.

Bei der erfindungsgemäßen Projektionsvorrichtung kann grundsätzlich zu jedem Zeitpunkt Bildinformation übertragen werden, d.h. an allen Orten der Lissajous-Trajektorie können Bildpunkte übertragen werden. Die Bilder werden somit vorzugsweise bidirektional übertragen in jeder der vorzugsweise zwei orthogonalen Scanachsen. Die Modulationseinheit wird vorzugsweise von einer Steuereinheit angesteuert, die die zu jeder Spiegelstellung gehörenden Bilddaten, z.B. in Form von RGB-Bildpunkt-Intensitäten in einem festen Zeittakt, der in einem Digitalbaustein, z.B. einem FPGA oder einem ASIC vorgegeben wird, aus einem zugeordneten Bildspeicher ausgelesen werden. Entsprechend steuert die Modulationseinheit zum ausgelesenen Intensitätswert die modulierbar RGB-Laserquelle an. Die erfindungsgemäße Projektionsvorrichtung ist nicht auf eine feste Bildpunkt-Projektions-Rate begrenzt, so wäre es ebenso gut möglich, eine variable Bildpunkt-Projektions-Rate zu realisieren, welche beispielsweise unterschiedlichen Scangeschwindigkeiten Rechnung trägt und eine auf den Scanwinkel bezogene äquidistante Bildpunkt-Projektion erzeugt.

Vorzugsweise sind bei der Projektionsvorrichtung zur Temperaturstabilisierung eine oder mehrere Strahlungsquellen der Ablenkeinheit zugeordnet, die abhängig von der vom zu projizierenden Bild bestimmten Intensität des Lichtstrahls die Ablenkeinheit bestrahlt. Auf diese Weise können die von den Intensitäten des Lichtstrahls hervorgerufenen Temperaturschwankungen in der Ablenkeinheit kompensiert werden

Ausführungsbeispiele der Erfindung sind in der Zeichnung dargestellt und werden in der nachfolgenden Beschreibung näher erläutert. Es zeigen:

Fig. 1      die Amplituden- und Phasengänge eines hochgedämpften Resonanz-Scanners niedriger Güte nach dem Stand der Technik und die Amplituden- und Phasengänge für einen bauähnlichen Scanner, sprich einer Ablenkeinheit auf MEMS-Basis hoher Güte,

Fig. 2      eine schematische Darstellung einer erfindungsgemäßen Ablenkeinrichtung mit einem Regelkreis,

Fig. 3      eine Aufsicht auf einen zweiachsigen, kardanisch aufgehängten Mikrospiegel mit Kammantrieben,

Fig. 4      einen Ausschnitt einer nicht geschlossenen Lissajous-Trajektorie, bei der das Verhältnis der Schwingungsfrequenzen in den zwei Achsen kleiner als die Auflösung des Pixelrasters ist,

Fig. 5      eine Darstellung entsprechend der Fig. 4, bei der das Verhältnis der Schwingungsfrequenzen näherungsweise identisch mit der Auflösung des Pixelrasters ist,

Fig. 6      einen schematischen Aufbau einer erfindungsgemäßen Projektionsvorrichtung mit erfindungsgemäßer Ablenkeinrichtung,

Fig. 7      ein Blockschaltbild eines Phasenregelkreises und

Fig. 8      ein detaillierteres Schaltbild der Ansteuervorrichtung für die Ablenkeinheit.

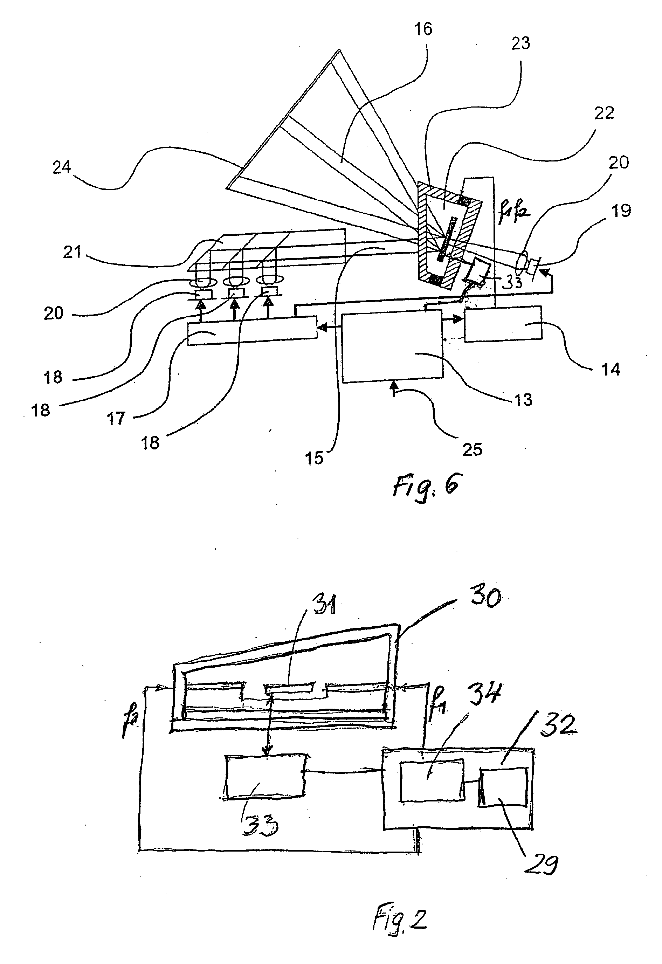

Wie schon ausgeführt, sind in der Fig. 1 Amplituden- und Phasengänge von hochgedämpften 1, 2 Mikrospiegeln und von hochgütigen 3, 4 Mikrospiegeln für Resonanzfrequenzen zwischen 17,15 kHz und 17,17 kHz dargestellt. Um die Auswirkungen von äußeren Einflüssen, beispielsweise von Temperaturänderungen, zu zeigen, sind gestrichelt mit der Kurve 3' und der Kurve 4' eine Resonanzverschiebung dargestellt, d.h. die Frequenz hat sich um einen geringfügigen Wert zu unteren Frequenzen hin verschoben. Die Frequenz der Ansteuersignale verbleibt nach dem Stand der Technik jedoch auf dem vorherigen Wert, d.h. die Ansteuersignale bzw. die Antriebssignale können abbremsend auf den Spiegel wirken, d.h., er schwingt nicht mehr mit der Resonanzfrequenz. Daher wird erfindungsgemäß eine Phasenregelung gemäß Fig. 2 vorgeschlagen.

In Fig. 2 ist schematisch mit 30 eine Ablenkeinheit dargestellt, die als Ablenkelement 31 einen zweiachsigen, kardanisch aufgehängten Mikrospiegel 31 umfasst. Die Ablenkeinheit bzw. der Mikrospiegel 31, dessen Antrieb nicht näher dargestellt ist, wird von einem von einer Ansteuervorrichtung 32 gelieferten Ansteuersignal für jede Achse mit den Frequenzen f1 und f2 als Ansteuerfrequenzen angetrieben. Diese Ansteuerfrequenzen f1, f2 sollten Resonanzfrequenzen des Spiegels 31 entsprechen. Damit der Spiegel 31 auch bei Änderung seiner Resonanzfrequenz dieser nachgeführt werden kann, weist die Ansteuervorrichtung 32 einen Phasenregelkreis 34 auf, der die Phase und damit die Ansteuerfrequenz der Ansteuersignale so nachregelt, dass der Spiegel im Wesentlichen bei Resonanz arbeitet. Zur Erfassung der Phasenlage ist eine Messvorrichtung 33 vorgesehen, die die sinusförmige Auslenkung des Mikrospiegels 31 misst. Außerdem ist mit 29 ein Liniendichte-Regelkreis vorgesehen, der eine sich als Ergebnis der Phasenregelung möglicherweise einstellende ungünstige Liniendichte der Lissajous-Trajektorien korrigiert und in einem vorgegebenen Toleranzbereich hält. Dies geschieht basierend auf einer gezielten Verstimmung einer der beiden oder beider Resonanzfrequenzen.

Bedingt durch die hohen Ablenk- oder Scangeschwindigkeiten kann die momentane Spiegelposition nicht in jedem Fall zu jedem beliebigen Zeitpunkt diskret mit ausreichender Präzision und Auflösung gemessen werden. Jedoch kann aus kontinuierlich gemessenen Amplitudeninformationen sehr präzise die Phasenlage, insbesondere der Nulldurchgang der sinusförmigen Schwingungen ermittelt werden. Dies kann mit Hilfe von optischen oder kapazitiven, piezoresistiven oder piezoelektrischen Sensoren erfasst werden.

Optisch läßt sich die Position und Phasenlage eines resonanten Spiegels über einen Monitor-Laserstrahl und eine positionssempfindliche 2D-Photodiode (PSD) zeitaufgelöst erfassen. Je nach Auftreffort des am Spiegel abgelenkten Laserstrahls werden an den vier Ableitelektroden des PSDs unterschiedliche Photoströme abgegriffen und per Strom-Spannungswandler und anschließende Differenzbildung, Summenbildung und schließlich Quotientbildung (Differenz geteilt durch Summe) in ein zeitaufgelöstes XY-Positionssignal gewandelt.

Bei der piezoresistiven Messmethode bewirkt der während der Torsionsschwingung erzeugte, vom Auslenkwinkel abhängige, mechanisch induzierte Stress in den Torsionsfedern eine Widerstandsänderung in den Sensor-Strukturen. Diese wird in der Regel durch eine Wheatstone-Brücke ausgewertet und liefert ein dem Torsionswinkel proportionales Ausgangssignal.

Bei piezoelektrischen Sensoren basierend z.B. auf Aluminiumnitrid- oder Bleizirkontitanat-Schichten erzeugt die Verdrillung der Torsionsfeder eine Gitterveränderung, die eine Ladungsverschiebung verursacht. Die räumliche Ladungsänderung kann als eine dem Verkippwinkel proportionale Spannung gemessen werden.

Bei kapazitiven Ausletverfahren wertet man die vom Verkippwinkel abhängige zeitlich veränderliche Kapazität zwischen statischen und beweglichen Sensor-Elektrodenfingern aus. Aus der Literatur ist eine ganze Reihe unterschiedlicher Auswerte-Methoden bekannt. Häufig werden sogenannte Trägerfrequenz-Verfahren verwendet. Dazu wird eine hochfrequent modulierte Spannung an die Sensorkammstrukturen angelegt. Die Bewegung der fingerförmigen Kapazitäten erzeugt einen kapazitiven Strom, dessen Signalform eine Amplitudenmodulation des Trägersignals darstellt. In der Amplitudenmodulation ist die Information über die Spiegelbewegung enthalten und kann durch Multiplikation (Mischen) und Filterung extrahiert werden.

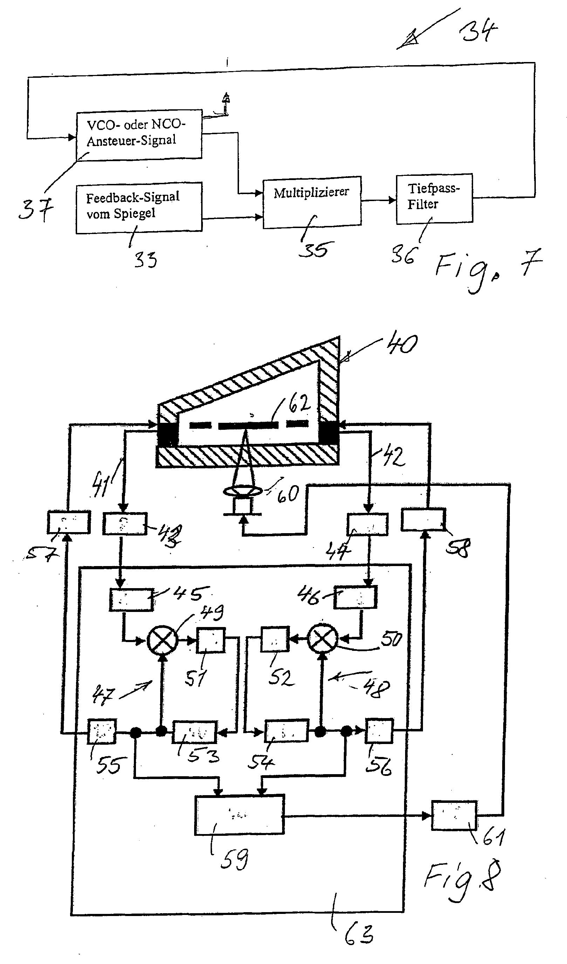

In Fig. 7 ist ein Phasenregelkreis 34 dargestellt, wie er in der Ansteuervorrichtung 32 verwendet werden kann.

In der Regel sind alle die oben beschriebenen Messverfahren mehr oder weniger stark mit Rauschen und Störungen behaftet, was eine direkte instantane Verwertung zur Projektions-Ort-Bestimmung und Pixel-Adressierung entsprechend der für die Bildprojektion (wird weiter in Zusammenhang mit Fig. 6 erläutert) geforderten Auflösung unmöglich macht. Daher wird z.B. im Phasenregelkreis 34 ein Lock-In-Verstärker mit einem Multiplizierer 35 und einem Tiefpassfilter 36 herangezogen, um ein präzises Phasendifferenzsignal zu ermitteln. Weiterhin weist der Regelkreis 34 einen spannungsgesteuerten (VCO) oder numerisch gesteuerten Oszillator (NCO) 37 auf, der dem Tiefpassfilter 36 nachgeschaltet ist und mit dem Multiplizierer 35 verbunden ist. Der Multiplizierer 35 erhält somit das Signal von der Messvorrichtung 33, d.h. das Feedback-Signal vom Spiegel 31 und das Ausgangssignal vom Oszillator 37.

Um nicht auf eine Phasendifferenz Null, sondern auf einen beliebig einstellbaren Wert zu regeln, muss ein Phasenschieber zwischen dem Ausgang des Oszillators, der das Referenzsignal für den Regelkreis vorgibt, und dem Multiplizierer 35 vorgesehen sein, auf den der Übersicht wegen verzichtet wurde. Mit Hilfe des Phasenschiebers wird das Referenz-Oszillator-Signal (hier das VCO-Signal vor der Multiplikation) so verzögert, dass auch ein von Null verschiedener Sollwert für die Phasendifferenz voreingestellt werden kann. Um den Spiegel in Resonanz zu halten ließe sich dieser Phasenregler so einstellen, dass unter Berücksichtigung aller auftretenden Verzögerungen der Signalverarbeitung sich eine Phasendifferenz von beispielsweise 90 Grad zwischen Ansteuersignal und Spiegel-Oszillation ergibt.

Die Differenz zwischen Spiegel-Phasenwinkel und Phasenwinkel des Ansteuersignals kann ausreichend präzise ermittelt werden mit Hilfe des Lock-In-Verstärkers, indem man das Ansteuersignal (Referenz-Oszillator) zunächst multipliziert mit dem zum Beispiel kapazitiv gewonnenen Feedback-Signal und anschließend tiefpassfiltert. Am Ausgang wird entsprechend trigonometrischer Zusammenhänge ein DC-Signal erhalten, welches eine der Phasendifferenz (Spiegel-Phase zu Referenz-Oszillator) proportionale Amplitude besitzt. Wird dieses Ausgangssignal des Lock-In-Verstärkers über einen nicht dargestellten Verstärker (Gain) dem Eingang des Oszillators 37 zugeführt, so wird ein PLL Regelkreis (Phase-Locked-Loop) erhalten. Mit Hilfe dieses PLLs läßt sich eine konstante Phasendifferenz zwischen Spiegel und Ansteuersignal realisieren. Mit anderen Worten, der PLL kann dafür Sorge tragen, dass der Spiegel sich stets in Resonanz oder definiert nahe der Resonanz befindet, d.h. die Ansteuerfrequenzen f1, f2 stimmen mit den Resonanzfrequenzen des Spiegels 31 überein.

Dies bedeutet, dass die Frequenzen f1, f2 der Ansteuersignale nicht dauerhaft konstant sind, sondern sich zugunsten der Phasen- und Amplitudenstabilisierung ändern können. Weiterhin besitzen die Resonanzfrequenzen von horizontaler und vertikaler Strahlablenkung kein festes ganzzahliges Verhältnis. Dadurch ist die Lissajous-Trajektorie nicht ortsfest und es gibt im Allgemeinen keine feste Wiederholrate der Lissajous-Trajektorie. Dies würde bei einer Bildprojektionsvorrichtung bedeuten, dass es keine feste vorhersehbare Reihenfolge des Bildspeicher-Auslese-Vorgangs gibt, da die Abtastung der Projektionsfläche nicht konstant ist.

Die zeitliche Variation der Lissajous-Trajektorie hat den günstigen Umstand zur Folge, dass die unerwünschten Speckle-Muster, die bei Laserprojektionen auftreten, wahrnehmbar verringert werden, weil auf der Projektionsfläche nicht stets die gleichen, sondern verschiedene Streuzentren getroffen werden. Dies aber hat zur Folge, dass auch die Speckle-Muster variieren und im Auge durch Überlagerung und zeitliche Integration gemittelt werden. Dies ist ein Vorteil gegenüber allen Laser-Projektionsverfahren mit ortsfesten Trajektorien.

Der in Fig. 2 dargestellte Phasenregelkreis 34 ist nur schematisch für beide Achsen angedeutet, es kann für jede Schwingungsachse ein Phasenregelkreis vorgesehen sein. Auch wenn in jeder Schwingungsachse Phasenregelkreise zur Stabilisierung einer Phasendifferenz zwischen Anregungssignal und entsprechender Resonator-Schwingung existiert, so bilden doch die Schwingungen der beiden Achsen wegen der variablen Schwingungs(Oszillator)-Frequenz nie ein stabiles Phasenverhältnis zueinander.

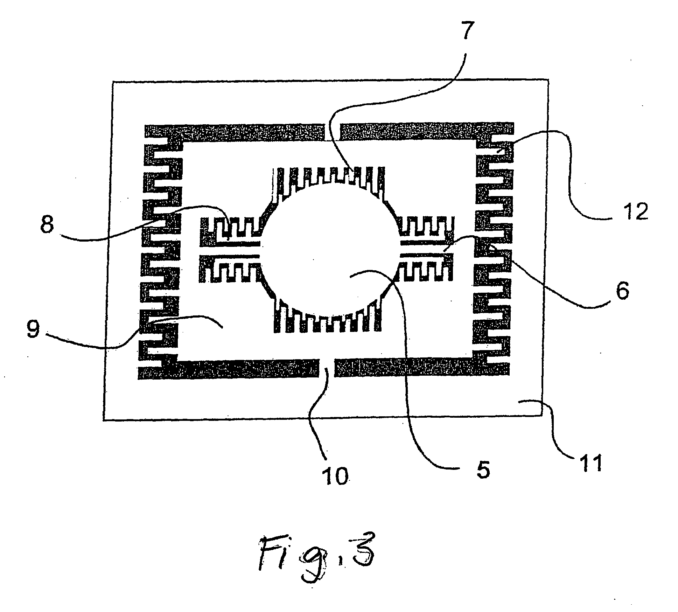

In Fig. 3 ist ein zweiachsiger, kardanisch aufgehängter Mikrospiegel 5, wie er in Fig. 3 verwendet werden kann, dargestellt. Es sind elektrostatische achsenferne Kammantriebe 7 und achsennahe Kammantriebe 8 dargestellt, die auch als Sensorelektroden verwendet werden können. Die Spiegelplatte 5 ist über Torsionsfedern 6 in einem beweglichen Rahmen 9 aufgehängt, der wiederum durch Torsionsfedern 10 in einem festen Chiprahmen 11 aufgehängt ist. Der Rahmen 9 kann durch elektrostatische Kamm-Antriebe 12 in Resonanz versetzt werden, wobei auf achsennahe Kammelektroden zu Antriebs- oder Sensorzwecken des beweglichen Rahmens 9 der Übersichtlichkeit wegen verzichtet wurde.

In Fig. 6 ist eine Anordnung einer Lissajous-Laser-Projektionsvorrichtung gemäß der Erfindung dargestellt. Diese Projektionsvorrichtung weist eine Ablenkeinrichtung gemäß Fig. 2 auf, wobei hier der Vakuum gekapselte zweiachsige MEMS-Spiegel-Scanner mit dem Bezugszeichen 22 bezeichnet ist. Als Strahlungsquelle sind rote, grüne und blaue Laserquellen 18 vorgesehen, deren Licht bzw. Strahlung durch Kollimatoren 20 parallelisiert und durch ein Strahlvereinigungssystem 21 zu einem koaxialen Strahl 15 geformt wird. Dieser Strahl 15 wird durch den schrägen Glasdeckel 23 des MEMS-Spiegel-Scanners 22, auf den Spiegel gerichtet. Der abgelenkte Laserstrahl 16 leuchtet zweiachsig eine Projektionsfläche 24 aus. Digitale Bilddaten werden über einen Eingang 25 an eine digitale Signalverarbeitungs- und Steuereinheit 13 geliefert, in der den Bilddaten entsprechende Steuerimpulse an eine analoge Steuereinheit 17 übergeben werden, mit deren Hilfe die Emission der Laserquellen 18 gesteuert wird. Mit 33 ist die Messvorrichtung 33 zur Messung der Auslenkung des Spiegels der Ablenkeinheit 23 angedeutet, die mit der Signalverarbeitungs- und Steuereinheit 13 verbunden ist. Letztere steuert auch einen analogen Spannungsverstärker 14 an. Dieser bildet mit Teilen der Signalverarbeitungs- und Steuereinheit 13 die Ansteuervorrichtung nach Fig. 2, wobei hier nur eine Ansteuersignalleitung für beide Ablenkachsen mit den Frequenzen f1, f2 dargestellt ist. Die Signalverarbeitungs- und Steuereinheit 13 wiederum beinhaltet zwei Regelkreise 34 nach Fig. 7.

Weiterhin ist eine vierte Laserquelle 19 vorgesehen, die vorzugsweise eine Nah-Infrarot-Laserquelle ist, z.B. eine von der Wellenlänge her auf das Absorptionsmaximum von Silizium abgestimmte Laserdiode, die dazu eingesetzt werden kann, die Bilddaten bedingten Schwankungen der auf den Spiegel auftreffenden Laserleistung konstant zu halten. In der dargestellten Anordnung strahlt die Laserquelle 19 auf die unverspiegelte Rückseite des MEMS-Spiegel-Scanners 22. Hierdurch kann mit sehr geringer Laserleistung effizient die Frequenz einer der beiden Scanner-Achsen oder auch beider Achsen gleichzeitig beeinflusst werden.

Der von der Spiegelbewegung abhängige Zugriff auf die Bilddaten im Speicher der Signalverarbeitungs- und Steuereinheit 13 und die daraufhin folgende Ansteuerung der Laserquellen 18 kann nach dem folgenden Schema ablaufen. Mit Hilfe des optisch, piezoresistiv, piezoelektrisch oder kapazitiv gewonnenen Feedback-Signals lässt sich eine präzise Phaseninformation erhalten. Da dieses Feedback-Signal, wie schon in Zusammenhang mit Fig.7 beschrieben, im Allgemeinen gewisse Störanteile und Verzerrungen besitzen, wird diese Feedback-Signal weiterbearbeitet, vorzugsweise in dem schon erwähnten Lock-In-Verstärker, wobei diese Weiterbearbeitung in der Signalverarbeitungs- und Steuereinheit 13 enthalten ist. Am Ausgang des Lock-In-Verstärkers wird somit ein Signal erhalten, das proportional zu der Phasendifferenz zwischen Referenz-Oszillator 37 (VCO siehe Fig. 7) und dem Feedback-Signal ist. Unter der Voraussetzung, dass der Spiegel sinusförmig oszilliert, wird die Schwingungsform des Spiegels hinsichtlich Frequenz und Phase synthetisch nachgebildet. Bezüglich dieses Spiegel-Positionssignals können nun z.B. basierend auf einem festen Zeittakt (Pixelclock) Bildpunkt-Koordinaten für beide Achsen ermittelt und zugeordnete Speicherinhalte ausgelesen werden. Alle digitalen Vorgänge und Bauelemente sind Teil der Signalverarbeitungs- und Steuereinheit 13. Nach dem Auslesen der Speicherinhalte (Intensitätswerte) können auf der Grundlage dieser Inhalte die Laserquellen-Treiber 17 entsprechend angesteuert und über die Ansteuerung der Laserquellen 18 Bildpunkte übertragen werden.

Die Bildpunkt-Projektion sieht kein festes, unveränderliches ortsfestes Bildpunkt-Raster, sondern eine von diesem Raster abweichende Projektion vor, was nicht bedeuten soll, dass das Bild verzerrt wird, sondern dass theoretisch auch an den Stellen zwischen zwei Raster Punkten interpolierte Bildpixel gesetzt werden können. Wann ein Bildpunkt gesetzt wird, ist damit von der Pixelclock abhängig und nicht vom momentanen Aufenthaltsort. Der Aufenthaltsort bestimmt nur die zu übertragende aus dem Bildspeicher ausgelesene Pixelintensität. Vorzugsweise wird daher für das Projizieren eines Bildpunktes nicht nur eine Bildspeicher-Zelle, sondern alle unmittelbar benachbarten Pixel der momentanen Aufenthalts-Position ausgelesen und schwerpunktorientiert interpoliert. Es gibt kein Zeitintervall, während dem die Pixelclock keine Bilddaten-Projektion auslösen kann.

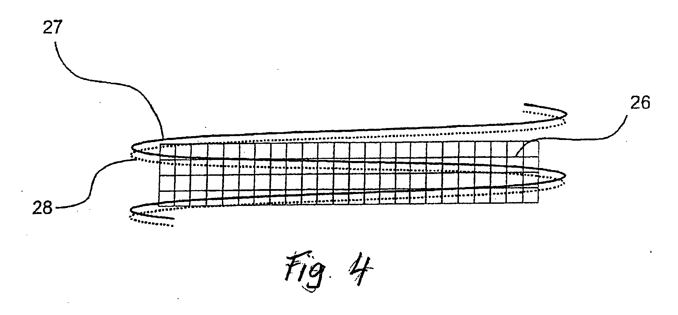

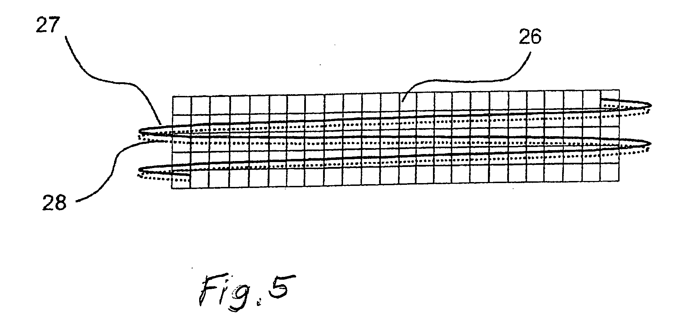

In Fig. 4 und Fig. 5 sind Ausschnitte einer nicht geschlossenen, d.h. nicht ortsfesten, Lissajous-Trajektorie 27 gezeigt. Bei derjenigen nach Fig. 4 bilden die variablen Abtastfrequenzen oder Scanfrequenzen, die den Resonanzfrequenzen des Spiegels entsprechen, ein Verhältnis zueinander, welches kleiner ist als die Auflösung des Pixelrasters. Beim zweiten Durchlauf passiert die Trajektorie 28 wegen des nicht ganzzahligen Verhältnisses dieser Scanfrequenzen und wegen der variablen Scanfrequenzen nicht mehr die gleiche Bahn wie zuvor die Trajektorie 27. Eine stabile Bildprojektion ist auch dann möglich, wenn bei jedem Scanvorgang geringfügig andere (Interlace-) Trajektorien produziert werden. Wichtig ist, dass die jeweils nach 1/60 Sekunden erreichte Zeilendichte in ausreichender Weise die Bildzeilenauflösung abdeckt.

In Fig. 5 ist eine entsprechende nicht geschlossene Lissajous-Trajektorie 27, wie in Fig. 4 gezeigt, bei der da Verhältnis der variablen Scanfrequenzen näherungsweise identisch mit der Auflösung eines Pixelrasters 26 ist. Auch hier wird beim zweiten Durchlauf nicht mehr die gleiche Bahn überstrichen, wie zuvor bei der Trajektorie 27.

Während gemäß Fig. 4 eine Wahl der Scan-Frequenzen f1 und f2 so stattfindet, dass deren Quotient geringer als die Zeilenzahl des zu projizierenden Bildes ist und erst eine Aneinander-Reihung von mehreren Interlace-Bildern das gesamte Bild abdeckt, ist bei dieser Darstellung nach Fig. 5 das Frequenzverhältnis direkt an die Zeilenzahl angepasst, so dass bereits beim ersten Durchlauf jede im Bild enthaltene Zeile "abgetastet" wird oder "gelesen" wird, "geschrieben" wird oder "projiziert" wird. Beim zweiten Durchlauf wird ebenfalls jede Zeile erneut gelesen und projiziert, aber wie veranschaulicht verläuft die Trajektorie geringfügig versetzt, was aber im Bild nicht störend auffällt.

Die Phasenregelung bringt, wie oben erwähnt, mit sich, dass das Projektions-Verfahren auf nicht ortsfesten Lissajous-Trajektorien basiert, wobei die Ansteuer- bzw. Schwingungsfrequenzen f1 und f2 der beiden Spiegelachsen variabel ausgelegt sind. Dabei ist unter "variabel" zu verstehen, dass sie innerhalb eines Intervalls veränderlich sind, welches durch die mögliche Verschiebung der Resonanzfrequenz der Ablenkeinheit, z.B. infolge von Temperaturschwankungen, gegeben ist. Durch die Regelung kann hervorgerufen werden, dass sich ungünstige Liniendichten der Lissajous-Figuren einstellen, die durch die aktuellen Frequenzen f1 und f2 beeinflusst werden. So ist es durchaus möglich, dass eine Verstellung einer der beiden Frequenzen um nur 0,01Hz darüber entscheidet, ob das projizierte Bild aus 10 Linien oder aus einigen Hundert Linien besteht. Es lassen sich somit günstige und ungünstige Frequenz-Intervalle und Frequenz-Verhältnisse definieren. Liegen die beiden Frequenzen f1 und f2 dicht beieinander z.B. 24000Hz und 24057Hz, dann gibt es relativ große günstige Frequenz-Intervalle. Liegen die Frequenzen f1 und f2 jedoch weit voneinander entfernt, etwa 500Hz und 24000Hz, dann sind die Intervalle günstiger Frequenzen schmaler.

In jedem Fall lassen sich solche günstigen und ungünstigen Bereiche im Vorfeld abhängig von der gewünschten Auflösung definieren und daraus Grenzwerte für die Frequenzen ableiten.

Die Lissajous-Kurve ist bekanntlich genau dann periodisch, wenn $f_1/f_2 = p/q$ eine rationale Zahl ist, wobei p und q ganzzahlig sind und keinen gemeinsamen Teiler besitzen. Die Wiederholfrequenz F der Lissajous-Kurve ist also:

$$F = f_1/p = f_2/q$$

Um eine gleichmäßige Ausleuchtung (hohe Liniendichte) zu erhalten, ist es das Ziel, F möglichst klein zu haben. Bei vorgegebenem $f_2$ heißt das, dass q eine möglichst große ganze Zahl sein sollte. In Bezug auf die Wahl des Frequenzverhältnisses $f_1/f_2$ ist man also an einer rationalen Zahl p/q mit möglichst großem Nenner interessiert. Möglichst kleines F heißt, dass F kleiner als die gewünschte Bildwiederholrate $f_B$ sein sollte.

Im vorhergehenden Absatz wurden ortsfeste Lissajous-Trajektorien betrachtet. Bedingt durch die in der Erfindung vorgeschlagene Phasenregelung hat man es nicht mit festen Frequenzen $f_1$ und $f_2$ zu tun. Die vorangegangenen Überlegungen sind trotzdem relevant für die Auslegung der Frequenzen $f_1$ und $f_2$ des zweiachsig resonanten Scan-Spiegels.

Wenn $f_1/f_2 = p/q$ rational ist, gibt q (ungefähr) die Anzahl der Knoten der Lissajous Figur in x-Richtung oder y-Richtung an. Für q Knoten braucht man 2q Linien, die sich schneiden. Die Anzahl der Pixel, die aufgelöst werden können, ist also q oder 2q, je nachdem ob man Linien oder Knoten zählt.

Wenn die Frequenzen und damit ihr Quotient um 1% =1/100 schwanken, gibt es in jedem Schwankungs-Intervall eine ungünstigste rationale Zahl mit kleinem Nenner q, q ist bestenfalls 100, meistens deutlich schlechter, typischerweise zwischen 10 und 20.

Daher ist es Teil dieser Erfindung, die ungünstigen Frequenzverhältnisse zu vermeiden. Die ungünstigen Frequenzverhältnisse können durch den Liniendichte-Regelkreis 29, im weiteren Ausführungsbeispiel durch thermoregulatorische Gegensteuerung bzw. -regelung vermieden werden, d.h. die Ablenkeinheit kann beispielsweise durch die NIR-Laserquelle 19 so bestrahlt werden, dass die Frequenz f1 und/oder f2 verändert wird. Selbstverständlich kann auch eine oder mehrere weitere Strahlungsquellen vorgesehen werden.

Um die Thermosteuerung bzw. -regelung gezielt durchführen zu können, muß für jede Ablenkeinheit nach ihrer Herstellung festgestellt werden, welche Verhältnisse der Ansteuerfrequenzen zu einer nicht annehmbaren Liniendichte führt und zu vermeiden sind. Dazu sind diese Frequenzverhältnisse in einem Speicher der Ansteuervorrichtung gespeichert. Außerdem sind in Form von Kurven oder Look-up-Tabellen die Frequenzabweichungen oder - verschiebungen in Abhängigkeit von der Ausgangsleistung des oder der Strahlungsquellen gespeichert.

Die Ansteuervorrichtung bzw. der Liniendichte-Regelkreis überwacht dann parallel zur Bild- oder Lissajous-Projektion die Frequenzverhältnisse bzw. die momentane Liniendichte und schaltet, wenn ungünstige Verhältnisse durch die Phasenregelung auftreten, die Strahlungsquelle ein oder aus.

Wenn z.B. die NIR-Laserquelle 19 oder eine entsprechende gewählt wird, kann eine gewisse Infrarot-Laserleistung als Sockelbetrag von Beginn an appliziert werden, wodurch sich die Beeinflussung in beide Richtungen durchführen läßt, nämlich einmal durch Reduktion der IR-Laserleistung und einmal durch Erhöhung der IR-Laserleistung.

Die NIR-Laserquelle 19 kann auch dazu verwendet werden, Änderungen der Resonatorfrequenzen, d.h. der Schwingungsfrequenzen des MEMS-Spiegelscanners 22 durch beispielsweise Änderung der Umgebungs-Temperaturen auszugleichen. Dazu kann ein vordefinierter Frequenzbereich für die Ansteuerfrequenzen vorgegeben werden.

In Fig. 6 bestrahlt die Laserquelle 19 die Rückseite des Spiegels, selbstverständlich kann auch ein anderer Auftreffort des Scanners 22 gewählt werden, um eine dominante Beeinflussung entweder der Spiegelresonanzfrequenz oder der Resonanzfrequenz des äußeren beweglichen Rahmens oder auch beider zu erzielen. Durch Applikation zweier Laserspots, einmal auf den Spiegel, einmal auf den äußeren beweglichen Rahmen, lassen sich basierend auf zwei unabhängig voneinander ansteuerbaren Laserquellen eine getrennte gleichzeitige Beeinflussung der Resonanzfrequenzen beider Achsen erzielen.

In Fig. 8 ist noch einmal genauer die Ablenkvorrichtung nach Fig. 2 mit dem Phasenregelkreis 34 der Fig. 7 dargestellt, wobei der Übersicht wegen teilweise neue Bezugszeichen gewählt sind, obwohl teilweise gleiche Bestandteile wie in diesen Figuren verwendet werden. 40 bezeichnet den schon beschriebenen Vakuum gekapselten 2D-Scanner bzw. die Ablenkeinheit. Für jede Ablenkachse wird ein Messsignal 41, 42 als kapazitives Feedback jeweils einem Strom-Spannungswandler 43, 44 zugeführt, die mit A/D Wandlern 45, 46 verbunden sind, die die analogen Signale in digitale Feedback-Signale umwandeln. Den A/D Wandlern 45, 46 sind die Phasenregelkreise 47, 48 nachgeschaltet, die jeweils aus den digitalen Multiplizierern 49, 50, den digitalen Tiefpass-Filtern 51, 52 und den Oszillatoren (NCO) 53, 54 bestehen. Über D/A Wandler 55, 56 und analoge Spannungsverstärker 57, 58 werden die Phasensignale als Ansteuersignale den Antrieben der Ablenkeinheit 40 zugeführt.

Die jeweiligen Ausgangssignale der Oszillatoren 53, 54, die den Ansteuersignalen mit den Frequenzen f1 und f2 entsprechen, werden einer Einheit 59 zur digitalen Überwachung des Frequenzverhältnisses f1/f2 und zur digitalen Ansteuerung einer IR-Laserquelle 60 zugeführt. In dieser Einheit 59 sind z.B die für die Dichte der Lissajous-Linien nachteiligen Frequenzverhältnisse gespeichert. Falls ein solches nachteiliges Frequenzverhältnis aufgrund der Phasenregelung auftreten würde, steuert die Einheit 59 über einen analogen IR-Laserquellentreiber 61 die Laserquelle 60 zum Bestrahlen des Spiegels 62 an. Dabei ist der notwendige Leistungseintrag, der z.B. über die Zeit des Ansteuern der Laserquelle 60 bestimmt wird, abhängig von der Frequenzverschiebung in der Einheit 59 gespeichert bzw. als funktioneller Zusammenhang abgelegt. Somit kann dem ungünstigen Frequenzverhältnis von vornherein entgegengelenkt werden.

Die beschriebenen wesentlichen Bauteile sind zu einer die Ansteuervorrichtung bildenden Steuereinheit 63 als FPGA oder ASIC zusammengefasst.

Wie schon oben erläutert wurde, verwendet eine besonders vorteilhafte Ausgestaltung der Ablenkeinrichtung einen Zweiachsen-MEMS-Spiegel-Scanner, dessen Resonanzfrequenzen der beiden orthogonalen Scanachsen oberhalb 16 kHz liegen, wobei sie sich durch Ausführung des Designs nur um weniger als 10% voneinander unterscheiden. Die Vorteile einer solchen Anordnung liegen in der besonderen Eignung für den Automobilbereich, bei dem es darum geht, ein besonders schock- und vibrationsunempfindliches Projektionssystem mit gleichzeitig sehr hoher Auflösung zu realisieren, etwa für Armaturendisplays, Armaturenbrett-Displays oder Beifahrer-Unterhaltung. Die Schockunempfindlichkeit wird durch die beiden sehr hohen und nahe beieinander liegenden Resonanzfrequenzen erzielt. Anders als bei Lissajous-Scannern nach dem Stand der Technik mit sehr großem Frequenz-Verhältnis von schneller zu langsamer Achse liegen bei der vorliegenden Erfindung in der Regel keine parasitären Moden zwischen den beiden Nutzmoden. Wegen der relativ hoch liegenden beiden Resonanzfrequenzen, die sich nur geringfügig unterscheiden, ist es möglich, gleichzeitig einen breiten Frequenz-Raum zu realisieren, indem sich die beiden Scanfrequenzen verändern dürfen, ohne dass sich Lissajous-Trajektorien mit geringer Liniendichte ergeben können.

## Patentansprüche

1. Ablenkeinrichtung für eine Projektionsvorrichtung zum Projizieren von Lissajous-Figuren auf ein Beobachtungsfeld, die ausgebildet ist, einen Lichtstrahl um mindestens eine erste und eine zweite Ablenkachse zur Erzeugung der Lissajous-Figuren umzulenken, mit einer Ablenkeinheit (30) zur Erzeugung von Schwingungen um die Ablenkachsen und einer Ansteuervorrichtung (32) zur Erzeugung von Ansteuersignalen für die Ablenkeinheit (30) mit einer ersten und zweiten Ansteuerfrequenz, die den Resonanzfrequenzen der Ablenkeinheit entsprechen, **dadurch gekennzeichnet,**

**dass** die Ablenkeinheit (30) einen Gütefaktor von >3.000 aufweist und dass die Ansteuervorrichtung (32) einen ersten Regelkreis (34) umfasst, der ausgebildet ist, abhängig von einer gemessenen Phasenlage der Schwingungen der Ablenkeinheit die erste und/oder die zweite Ansteuerfrequenz so zu regeln, dass die maximale Amplitude der Schwingungen in dem Resonanzbereich der Ablenkeinheit (30) verbleibt, wobei die Ansteuerfrequenzen kein festes ganzzahliges Verhältnis aufweisen, wobei die Ansteuervorrichtung (32) einen zweiten Regelkreis (29) aufweist, der ausgebildet ist, abhängig von einer durch die Ansteuerfrequenzen vorgegebenen Liniendichte der Lissajous-Figuren die Resonanzfrequenz der ersten und/oder der zweiten Ablenkachsen so zu beeinflussen, dass die Liniendichte in einem vorgegebenen Toleranzbereich liegt.

2. Ablenkeinrichtung nach Anspruch 1, **dadurch gekennzeichnet, dass** der erste Regelkreis ausgebildet ist, die Ansteuerfrequenzen so zu regeln, dass sich die Amplitude der Schwingungen der jeweiligen Ablenkachse um weniger als 1 geteilt durch eine Minimalauflösung des Beobachtungsfeldes ändert.

3. Ablenkeinrichtung nach Anspruch 1 oder Anspruch 2, **dadurch gekennzeichnet, dass** der zweite Regelkreis (29) ausgebildet ist, die Resonanzfrequenz der ersten und/oder zweiten Ablenkachse(n) durch Verändern einer vorgegebenen Antriebsspannung der Antriebsachse(n), durch Verstimmen der Federsteifigkeit und/oder durch Temperatureintrag auf die Ablenkeinheit zu beeinflussen.

4. Ablenkeinrichtung nach einem der Ansprüche 1 bis 3, **dadurch gekennzeichnet, dass** der erste Regelkreis (34) ausgebildet ist, die Ansteuerfrequenzen so zu regeln, dass sich die Amplitude der Schwingungen der jeweiligen Ablenkachse um weniger als 1%, vorzugsweise weniger als 0,5%, noch bevorzugter weniger als 0,3% ändert.

5. Ablenkeinrichtung nach einem der Ansprüche 1 bis 4, **dadurch gekennzeichnet, dass** die Ablenkeinheit (30) einen Gütefaktor >20.000, vorzugsweise >100.000 aufweist.

6. Ablenkeinrichtung nach einem der Ansprüche 1 bis 5, **dadurch gekennzeichnet, dass** die Ablenkeinheit (30) vakuumgekapselt ist, vorzugsweise auf Wafer-Ebene.

7. Ablenkeinrichtung nach einem der Ansprüche 1 bis 4, **dadurch gekennzeichnet, dass** die Ansteuervorrichtung (32) eine Messvorrichtung (33) zur kapazitiven, optischen, piezoresistiven oder piezoelektrischen Messung der Phasenlage aufweist.

8. Ablenkeinrichtung nach einem der Ansprüche 1 bis 7, **dadurch gekennzeichnet, dass** mindestens eine auf die Ablenkeinheit (30) gerichtete Strahlungsquelle (19, 60) zur Temperaturkompensation vorgesehen ist und die Ansteuervorrichtung (32) ausgebildet ist, die Strahlungsquelle (19, 60) intensitätsmoduliert zu steuern, wenn die zur Regelung der Phasenlage und der Amplitude auftretende Änderung der ersten und/oder zweiten Ansteuerfrequenz größer ist als ein vorgegebener Wert.

9. Ablenkeinrichtung nach einem der Ansprüche 1 bis 8, **dadurch gekennzeichnet, dass** der zweite Regelkreis (29) mindestens eine auf die Ablenkeinheit (30) gerichtete Strahlungsquelle (19, 60) zur Temperaturbeeinflussung aufweist, und die Ansteuervorrichtung (32) ausgebildet ist, den von der Strahlungsquelle (19, 60) hervorgerufenen Leistungseintrag, abhängig von vorgegebenen, die Dichte der Lissajous-Figuren bestimmenden Verhältnissen der Ansteuerfrequenzen, die durch die Phasenregelung veränderbar sind, zu regeln.

10. Ablenkeinrichtung nach Anspruch 9, **dadurch gekennzeichnet, dass** die Ansteuervorrichtung (32) bzw. der zweite Regelkreis (29) einen Speicher (59) aufweist, in dem eine Zuordnungs-Tabelle zwischen der Frequenzverschiebung und der Temperaturbeeinflussung gespeichert ist oder dass die Ansteuervorrichtung (32) bzw. der zweite Regelkreis (29) programmtechnisch so eingerichtet ist, dass der Leistungseintrag unter Verwendung einer mathematischen Funktion gesteuert wird.

11. Ablenkeinrichtung nach einem der Ansprüche 1 bis 10, **dadurch gekennzeichnet, dass** die Ablenkeinheit (30) mindestens einen Mikrospiegel (31) aufweist, wobei der optische Gesamtauslenkungswinkel des Spiegels >30 Grad, vorzugsweise >40 Grad, noch bevorzugter >60 Grad ist.

12. Projektionsvorrichtung zum Projizieren eines Bildes auf ein Bildfeld mit einer Ablenkeinrichtung nach einem der Ansprüche 1 bis 11, mit einer Projektionsstrahlungsquelle (18) und einer Modulationseinheit (17) zum Modulieren der Intensität des Lichtstrahls der Projektionsstrahlungsquelle (18) in Abhängigkeit von dem zu projizierenden Bild und dem Ort des Lichtstrahls auf dem Bildfeld.

13. Projektionsvorrichtung nach Anspruch 12, **dadurch gekennzeichnet, dass** die Projektionsstrahlungsquelle zur Erzeugung des abzulenkenden Lichtstrahls mindestens eine, vorzugsweise mehrere mehrfarbig abstrahlende Laserdioden (18) umfasst.

**14.** Projektionsvorrichtung nach Anspruch 12 oder Anspruch 13, **dadurch gekennzeichnet, dass** mindestens eine intensitätsmodulierbare Strahlquelle (19) zum Bestrahlen der Ablenkeinheit (30) umfasst ist und die Ansteuervorrichtung (32) ausgebildet ist, die Strahlungsintensität der Strahlquelle (19) in Abhängigkeit von der momentanen Strahlungsintensität der Projektions-Strahlungsquelle (18) zu steuern.

**15.** Verfahren zum Ansteuern einer Ablenkeinrichtung für eine Projektionsvorrichtung zum Projizieren von Lissajous-Figuren auf ein Beobachtungsfeld, wobei die eine Ablenkeinheit aufweisende Ablenkeinrichtung einen Lichtstrahl um mindestens eine erste und eine zweite Ablenkachse zur Erzeugung der Lissajous-Figuren umlenkt und die Ablenkeinheit zur Erzeugung von Schwingungen um die Ablenkachsen mit einer ersten und einer zweiten Ansteuerfrequenz angesteuert wird, die so gewählt sind, dass die Ablenkeinheit in Resonanz arbeitet, **dadurch gekennzeichnet, dass** die Ablenkeinheit der Ablenkeinrichtung so ausgebildet wird, dass sie einen Gütefaktor >3.000 aufweist und dass die Phasenlage der Schwingungen der Ablenkeinheit um mindestens eine Ablenkachse gemessen wird und durch Änderung der ersten und/oder zweiten Ansteuerfrequenz so geregelt wird, dass die Amplitude der Schwingungen im Resonanzbereich der Ablenkeinheit gehalten wird, wobei die Ansteuerfrequenzen zur Erzielung von zeitlich veränderbaren Lissajous-Trajektorien kein festes ganzzahliges Verhältnis aufweisen und wobei abhängig von einer durch die Ansteuerfrequenzen vorgegebenen Liniendichte der Lissajous-Figuren die Resonanzfrequenz der ersten und/oder der zweiten Ablenkachsen so geregelt werden, dass die Liniendichte in einem vorgegebenen Toleranzbereich liegt.

**16.** Verfahren nach Anspruch 15, **dadurch gekennzeichnet, dass** die Ansteuerfrequenzen derart geregelt wird, dass sich die Amplitude der Schwingungen der jeweiligen Ablenkachse um weniger als dem Kehrwert einer minimale Auflösung des Bildes der Lissajous-Figuren ändert und/oder dass sich die Amplitude der Schwingungen der jeweiligen Ablenkachse um weniger als 1%, vorzugsweise weniger als 0,5%, noch bevorzugter weniger als 0,3% ändert.

**17.** Verfahren nach Anspruch 15 oder 16, **dadurch gekennzeichnet, dass** die Ablenkeinheit (30) mit elektromagnetischer Strahlung von einer Strahlungsquelle (19, 60) bestrahlt wird, wobei der von der Strahlungsquelle hervorgerufene Leistungseintrag abhängig von einer durch die Phasenregelung auftretende Frequenzverschiebung mindestens einer der Ansteuerfrequenzen gesteuert wird.

**18.** Verfahren nach Anspruch 17, **dadurch gekenn-**

**zeichnet, dass** der Leistungseintrag abhängig von vorgegebenen, die Dichte der Lissajous-Figuren bestimmenden Verhältnissen der Ansteuerfrequenzen geregelt wird, wobei die die Verhältnisse bestimmenden Frequenzverschiebungen vorgegebenen Leistungseinträgen, vorzugsweise in Form einer Kurve oder einer Tabelle oder einer mathematischen Funktion, zugeordnet werden.

**19.** Verfahren nach Anspruch 17 oder 18, **dadurch gekennzeichnet, dass** der Leistungseintrag dann vorgenommen wird, wenn die aufgrund der Phasenregelung hervorgerufene Änderung der ersten und/oder zweiten Ansteuerfrequenz einen vorgegeben Wert überschreitet.

**Claims**

**1.** A deflection device for a projection apparatus for projecting Lissajous figures onto an observation field, which is configured to deflect a light beam about at least one first and one second deflection axis for generating Lissajous figures, comprising a deflection unit (30) for producing oscillations about the deflection axes and a control device (32) for producing control signals for the deflection unit (30), the control signals having a first and second control frequencies which substantially correspond to the resonant frequencies of the deflection unit, **characterized in that** the deflection unit (30) has a quality factor of > 3,000 and **in that** the control device (32) includes a first feedback loop (34) which is configured to regulate the first and/or second control frequencies in dependence on a measured phasing of the oscillations of the deflection unit so that the maximum amplitude of the oscillations remains in the resonant range of the deflection unit (30), whereby the control frequencies do not have a fixed integer number ratio, the control device (32) comprising a second feed back loop (29) which is configured to influence the resonance frequency of the first and/or second deflection axis dependent on a line density of the Lissajous figures given by the control frequencies in such a way that the line density is within a given tolerance range.

**2.** A deflection device in accordance with claim 1, **characterized in that** the first feedback loop is made to regulate the control frequencies so that the amplitude of the oscillations of the respective deflection axis changes by less than 1 divided by a minimal resolution of the observation field.

**3.** A deflection device in accordance with either of claims 1 or 2, **characterized in that** the second feedback loop (29) is configured to influence the resonance frequency of the first and/or the second deflection axis by varying of a given control voltage, by detuning the spring constant and/or by temperature influencing the deflection unit.

4. A deflection device in accordance with one of claims 1 to 3, **characterized in that** the first feedback loop (34) is made to regulate the control frequencies so that the amplitude of the oscillations of the respective deflection axis changes by less than 1%, preferably less than 0.5%, even more preferably less than 0.3%.

5. A deflection device in accordance with one of the claims 1 to 4, **characterized in that** the deflection unit (30) has a quality factor >20,000, preferably > 100,000.

6. A deflection device in accordance with one of the claims 1 to 5, **characterized in that** the deflection unit (30) is vacuum encapsulated, preferably on a wafer plane.

7. A deflection device in accordance with one of the claims 1 to 4, **characterized in that** the control device (32) has a measuring apparatus (33) for the capacitive, optical, piezoresistive or piezoelectric measurement of the phasing.

8. A deflection device in accordance with one of the claims 1 to 7, **characterized in that** at least one radiation source (19, 60) directed to the deflection unit (30) is provided for temperature compensation and the control device (32) is made to control the radiation source (19, 60) in an intensity modulated manner when the change of the first and/or second control frequency taking place for the regulation of the phasing and the amplitude is larger than a preset value.

9. A deflection device in accordance with one of the claims 1 to 8, **characterized in that** the second feed back loop (29) comprises at least one radiation source (19, 60) directed to the deflection unit (30) is provided for temperature influencing and the control device (32) is configured to control the power input caused by the radiation source (19, 60) in dependence on the present relationships of the control frequencies which determine the density of the Lissajous figures and which are changeably by the phase regulation.

10. A deflection device in accordance with claim 9, **characterized in that** the control device (32) or the second feedback loop (29) has a memory (59) in which an association table between the frequency shift and the temperature influencing is stored; or **in that** the control device (32) or the second feedback loop (29) is adapted in a technical programming manner so that the power input is controlled using a mathematical function.

11. A deflection device in accordance with one of the claims 1 to 10, **characterized in that** the deflection unit (30) has at least one micromirror (31), with the total optical deflection angle of the mirror being > 30 degrees, preferably > 40 degrees, even more preferably > 60 degrees.

12. A projection apparatus for projecting an image onto an image field having a deflection device in accordance with one of the claims 1 to 11 having projection radiation source (18) and a modulation unit (17) for modulating the intensity of the light beam of the projection radiation source (18) in dependence on the image to be projected and on the location of the light beam on the image field.

13. A projection apparatus in accordance with claim 12, **characterized in that** the projection radiation source for producing the light beam to be deflected includes at least one laser diode with multicolor emission, preferably a plurality of radiating laser diodes (18) with multicolor emission.

14. A projection apparatus in accordance with either of claims 12 or 13, **characterized in that** at least one radiation source (19) which can be intensity modulated for irradiating the deflection unit (30) is comprised and the control device (32) is made to control the radiation intensity of the radiation source (19) in dependence on the instantaneous radiation intensity of the projection radiation source (18).

15. A method for controlling a deflection unit for a projection apparatus for projecting Lissajous figures onto an observation field, wherein the deflection device having a deflection unit deflects a light beam about at least one first and one second deflection axis for producing the Lissajous figures and the deflection unit for producing oscillations about the deflection axes is controlled by a first and a second control frequency which are selected so that the deflection unit works in resonance, **characterized in that** the deflection unit of the deflection device is made so that it has a quality factor of > 3,000; and **in that** the phasing of the oscillations of the deflection unit is measured about at least one deflection axis and is regulated by changing the first and/or second control frequencies so that the amplitude of the oscillations is kept in the resonant range of the deflection unit, whereby the control frequencies for generating time varying Lissajoustrajectories do not have a substantially fixed integer number ratio and the resonance frequency of the first and/or second deflection axis is regulated dependent on a line density given by the control frequencies in such a way that the line density is within a given tolerance range.

16. A method in accordance with claim 15, **characterized in that** the control frequencies are regulated so that the amplitude of the oscillations of the respective deflection axis changes by less than the reciprocal value of a minimal resolution of the image of the Lissajous figures; and/or **in that** the amplitude of the oscillations of the respective deflection axis changes by less than 1%, preferably less than 0.5%, even more preferably by less than 0.3%.

17. A method in accordance with either of claims 15 or 16, **characterized in that** the deflection unit (30) is irradiated with electromagnetic radiation by a radiation source (19, 60), with the power input initiated by the radiation source being controlled in dependence on a frequency shift of at least one of the control frequencies occurring due to the phase regulation.

18. A method in accordance with claim 17, **characterized in that** the power input is controlled in dependence on preset relationships of the control frequencies determining the density of the Lissajous figures, with the frequency shifts determining the relationships being associated with preset power inputs, preferably in the form of a curve or of a table or mathematical.

19. A method in accordance with either of claims 17 or 18, **characterized in that** the power input is carried out when the change in the first and/or second control frequencies caused due to the phase regulation exceeds a preset value.

## Revendications

1. Dispositif de déviation pour un système de projection pour la projection de figures de Lissajous sur un champ d'observation, qui est conçu pour dévier un faisceau lumineux autour d'au moins un premier et un deuxième axe de déviation pour la génération de figures de Lissajous, comportant une unité de déviation (30) pour la génération de vibrations autour des axes de déviation et un dispositif de commande (32) pour la génération de signaux de commande pour l'unité de déviation (30) avec une première et une deuxième fréquence de commande, qui correspondent aux fréquences de résonance de l'unité de déviation, **caractérisé en ce que** l'unité de déviation (30) présente un facteur de qualité > 3.000 et **en ce que** le dispositif de commande (32) comprend un premier circuit de régulation (34) conçu pour réguler, en fonction d'une relation de phase mesurée des vibrations de l'unité de déviation, la première et/ou la deuxième fréquence de commande de façon à ce que l'amplitude maximale des vibrations reste dans l'intervalle de résonance de l'unité de déviation (30), les fréquences de commande ne présentant pas de rapport entier fixe, le dispositif de commande (32) comprenant un deuxième circuit de régulation (29) conçu pour influencer, en fonction d'une densité de lignes prédéterminée par les fréquences de commande des figures de Lissajous, la fréquence de résonance du premier et/ou du deuxième axe de déviation de façon à ce que la densité lumineuse se trouve dans un intervalle de tolérance prédéterminé.

2. Dispositif de déviation selon la revendication 1, **caractérisé en ce que** le premier circuit de régulation est conçu pour réguler les fréquences de commande de façon à ce que l'amplitude des vibrations de l'axe de déviation correspondant varie de moins de 1 divisé par une résolution minimale du champ d'observation.

3. Dispositif de déviation selon la revendication 1 ou la revendication 2, **caractérisé en ce que** le deuxième circuit de régulation (29) est conçu pour influencer la fréquence de résonance du premier et/ou du deuxième axe de déviation en modifiant une tension d'entraînement prédéterminée du (des) axe(s) d'entraînement, en désaccordant la rigidité des ressorts et/ou par un apport de température à l'unité de déviation.

4. Dispositif de déviation selon l'une des revendications 1 à 3, **caractérisé en ce que** le premier circuit de régulation (34) est conçu pour réguler les fréquences de commande de façon à ce que l'amplitude des vibrations de l'axe de déviation correspondant varie de moins de 1%, de préférence de moins de 0,5%, de façon encore plus préférable de moins de 0,3%.

5. Dispositif de déviation selon l'une des revendications 1 à 4, **caractérisé en ce que** l'unité de déviation (30) présente un facteur de qualité > 20.000, de préférence > 100.000.

6. Dispositif de déviation selon l'une des revendications 1 à 5, **caractérisé en ce que** l'unité de déviation (30) est encapsulée sous vide, de préférence sur le plan d'une tranche.

7. Dispositif de déviation selon l'une des revendications 1 à 4, **caractérisé en ce que** le dispositif de commande (32) comprend un dispositif de mesure (33) pour la mesure capacitive, optique, piézorésistante ou piézoélectrique de la relation de phase.

8. Dispositif de déviation selon l'une des revendications 1 à 7, **caractérisé en ce qu'**au moins une source de rayonnement (19, 60) orientée vers l'unité de déviation (30) est prévue pour la compensation de la température et **en ce que** le dispositif de commande (32) est conçu pour commander la source de rayonnement (19, 60) avec une modulation d'intensité, lorsque la modification, nécessaire à la régulation de la relation de phase et de l'amplitude, de la première et/ou de la deuxième fréquence de commande est supérieure à une valeur prédéterminée.

9. Dispositif de déviation selon l'une des revendications 1 à 8, **caractérisé en ce que** le deuxième circuit de régulation (29) comprend au moins une source de rayonnement (19, 60) orientée vers l'unité de déviation (30) pour influencer la température et **en ce que** le dispositif de commande (32) est conçu pour réguler l'apport de puissance provoqué par la source de rayonnement (19, 60), en fonction des rapports de fréquence de commande prédéfinis et déterminant la densité des figures de Lissajous, qui sont modifiables par la régulation de la phase.

10. Dispositif de déviation selon la revendication 9, **caractérisé en ce que** le dispositif de commande (32) ou le deuxième circuit de régulation (29) comprend une mémoire (59) dans laquelle une table d'allocation entre le décalage de fréquence et l'influence de la température est enregistré, ou **en ce que** le dispositif de commande (32) ou le deuxième circuit de régulation (29) est configuré d'un point de vue technique de façon à ce que l'apport de puissance est commandé à l'aide d'une fonction mathématique.

11. Dispositif de déviation selon l'une des revendications 1 à 10, **caractérisé en ce que** l'unité de déviation (30) comprend au moins un micro-miroir (31), l'angle de déviation optique total du miroir > 30 degrés, de préférence > 40 degrés, de façon encore plus préférable > 60 degrés.

12. Dispositif de projection pour la projection d'une image sur un écran comportant un dispositif de déviation selon l'une des revendications 1 à 11, une source de rayonnement de projection (18) et une unité de modulation (17) pour la modulation de l'intensité du rayon lumineux de la source de rayonnement de projection (18) en fonction de l'image à projeter et de la localisation du rayon lumineux sur l'écran.

13. Dispositif de projection selon la revendication 12, **caractérisé en ce que** la source de rayonnement de projection pour la génération du rayon lumineux à dévier comprend au moins une, de préférence plusieurs diodes laser (18) émettant plusieurs couleurs.

14. Dispositif de projection selon la revendication 12 ou la revendication 13, **caractérisé en ce qu'**au moins une source de rayonnement (19) modulable en intensité est prévue pour irradier l'unité de déviation (30) et **en ce que** le dispositif de commande (32) est conçu pour commander l'intensité du rayonnement de la source de rayonnement (19) en fonction de l'intensité de rayonnement instantanée de la source de rayonnement de projection (18).

15. Procédé de commande d'un dispositif de déviation pour un dispositif de projection pour la projection de figures de Lissajous sur un champ d'observation, le dispositif de déviation comprenant une unité de déviation déviant un rayon lumineux autour d'au moins un premier et un deuxième axe de déviation pour la génération de figures de Lissajous et l'unité de déviation étant commandée, pour la génération de vibrations autour des axes de déviation, avec une première et une deuxième fréquence de commande, choisies de façon à ce que l'unité de déviation fonctionne en résonance, **caractérisé en ce que** l'unité de déviation du dispositif de déviation est conçue de façon à présenter un facteur de qualité > 3.000 et **en ce que** la relation de phase des vibrations de l'unité de déviation est mesurée autour d'au moins un axe de déviation et est régulée en modifiant la première et/ou la deuxième fréquence de commande, **en ce que** l'amplitude des vibrations est maintenue dans l'intervalle de résonance de l'unité de déviation, les fréquences de commande ne présentant pas, pour l'obtention de trajectoires de Lissajous variables dans le temps, de rapport entier fixe et, en fonction d'une densité de lignes des figures de Lissajous, prédéterminée par les fréquences de commande, la fréquence de résonance du premier et/ou du deuxième axe de déviation est régulée de façon à ce que la densité de lignes se trouve dans un intervalle de tolérance prédéterminé.

16. Procédé selon la revendication 15, **caractérisé en ce que** les fréquences de commande sont régulées de façon à ce que l'amplitude des vibrations de l'axe de déviation correspondant varie de moins que l'inverse d'une résolution minimale de l'image des figures de Lissajous et/ou **en ce que** l'amplitude des vibrations de l'axe de déviation correspondant varie de moins de 1%, de préférence de moins de 0,5%, de façon encore plus préférable de moins de 0,3%.

17. Procédé selon la revendication 15 ou 16, **caractérisé en ce que** l'unité de déviation (30) est irradiée avec un rayonnement électromagnétique d'une source de rayonnement (19, 60), l'apport de puissance provoqué par la source de rayonnement étant commandé en fonction d'un décalage de fréquence, provoqué par la régulation de phase, d'au moins une des fréquences de commande.

18. Procédé selon la revendication 17, **caractérisé en ce que** l'apport de puissance est régulé en fonction des rapports prédéfinis des fréquences de commande déterminant la densité des figures de Lissajous, les apports de puissance prédéterminés par les décalages de fréquences déterminant les rapports étant alloués, de préférence sous la forme d'une courbe, d'une table ou d'une fonction mathématique.

**19.** Procédé selon la revendication 17 ou 18, **caractérisé en ce que** l'apport de puissance est effectué lorsque la modification, provoquée par la régulation de phase, de la première et/ou de la deuxième fréquence de commande, dépasse une valeur prédéterminée.

Fig. 1

Fig. 6

Fig. 2

Fig. 3

27

26

28

Fig. 4

Fig. 5

_34_

| VCO- oder NCO-Ansteuer-Signal |
| --- |

_37_

| Feedback-Signal vom Spiegel |
| --- |

_33_

| Multiplizierer |
| --- |

_35_

| Tiefpass-Filter |
| --- |

_36_

**Fig. 7**

_40_

_62_

_41_   _42_

_60_

_57_   _43_   _44_   _58_

_45_   _46_

_49_   _50_

_51_   _52_

_47_   _48_

_55_   _53_   _54_   _56_

_59_   _61_

**Fig. 8**

_63_

**EP 2 514 211 B1**

**IN DER BESCHREIBUNG AUFGEFÜHRTE DOKUMENTE**

**In der Beschreibung aufgeführte Patentdokumente**

- EP 1419411 B1
- DE 102008008565
- US 7580007 B2
- WO 2006063577 A1
- DE 102007032801 A1